Europäisches Patentamt

(19) European Patent Office

Office européen des brevets

(11) Publication number: **0 087 877**
**A1**

## (12) EUROPEAN PATENT APPLICATION

(21) Application number: **83300696.8**

(22) Date of filing: **11.02.83**

(51) Int. Cl.³: **B 60 P 3/20**

(30) Priority: **22.02.82 GB 8205211**

(43) Date of publication of application:
**07.09.83 Bulletin 83/36**

(84) Designated Contracting States:
**BE DE FR GB NL SE**

(71) Applicant: **CRAVEN TASKER (SHEFFIELD) LIMITED**
**Staniforth Road**
**Darnall Sheffield S9 4LL(GB)**

(72) Inventor: **Mellors, Norman**
**469 Whirlowdale Road**
**Sheffield South Yorkshire, S11 9NH(GB)**

(74) Representative: **Ford, Michael Frederick et al,**
**MEWBURN ELLIS & CO. 2/3 Cursitor Street**
**London EC4A 1BQ(GB)**

(54) Refrigerated van construction.

(57) A refrigerated van which at its exterior has aluminium panels (12) riveted to upstanding members (10) of a stout metal frame and which at its interior has G.R.P. sandwich panels (14) also secured to the metal frame, the roof of the van being provided with longitudinally extending load-carrying rails (24) secured to a series of transverse support beams (28).

So that the structure will be particularly strong, the transverse support beams (28) rest at their opposite ends on the G.R.P. sandwich panels (14) lining the side walls and are also connected to upper ends of the upstanding frame members (10). The G.R.P. sandwich panels will preferably be provided with inserted load-carrying members, for example sections of timber (21) at the same spacing as the spacing of the upstanding members (10) of the frame, the transverse support beams (28) resting at their opposite ends on said inserted load-carrying members.

./...

FIG.1

"Refrigerated van construction"

The invention relates to the construction of refrigerated vans, and in particular to such vans which are to be subjected to roof loading, for example, roof loading imposed by suspended sides of meat.

One type of construction which has been used for many years has been a riveted construction of aluminium panels on a stout metal frame, a heat insulating foam material having been injected between inner and outer panels of the structure. Such structures have been found to have excellent strength and can be made sufficiently strong to withstand the considerable dynamic loading and eccentric loading resulting from applied roof loads, that is to say for example the roof loading imposed by the suspending of sides of meat from rails secured to the roof of the van. However, one drawback has been that as the heat resistant foam has cooled and set it has shrunk so that the aluminium panels have been caused to deflect inwardly, causing the walls of the van to have a somewhat rippled appearance. A further drawback is that the rivets which secure the aluminium panels to the frame structure are somewhat unsightly and when the structure is to carry suspended sides of meat the structure is not as hygienic as it could be because of the presence of the rivets along the inside walls of the van.

Another type of construction which has more recently been used is one which makes use of so-called G.R.P. sandwich panels, that is to say panels of heat insulating foam material sandwiched between sheets of plywood faced with a synthetic plastics material. Such a construction has obvious cosmetic appeal and does have the advantage of being hygienic in that the interior surfaces of the van can be wiped over and cleaned very easily. Such constructions have been used for vans subjected to roof loading. In this case, metal beams have been housed at spaced intervals in respective cavities formed in the sandwich panels forming the roof structure, and the usual rails have been suspended beneath the beams. However, in these cases there has been no serious attempt to provide a mechanical connection between the roof and bodyside structures. The construction has relied almost entirely on the end frames of the van to resist so-called "lozenging", that is to say lateral movement of the roof structure relative to the floor. It is thought that this is risky and that when such a construction of van has

**0087877**

been in use for some time the end frames of the body will become strained, particularly the end frame surrounding the rear doorway. Indeed, it is very likely that in some circumstances this will result in complete collapse of the vehicle body, this being an obvious safety hazard both when the vehicle is being driven (when imposed side loading is greatest) and when the vehicle is standing with its rear doors open (which is when the rear end frame is weakest).

The invention as claimed is intended to provide a remedy. It solves the problem of how to design a refrigerated van in which there is an effective mechanical connection between the roof and bodyside structures, thereby averting any danger of collapse of the structure even after long use.

The advantages offered by the invention are mainly that the transverse support beams to which the load-carrying rails are secured are connected to the bodyside structure in such a way that "lozenging" of the van body is resisted by the stout metal frame whilst a substantial amount of the vertical loading on the roof structure is taken by the G.R.P. sandwich panels, or, preferably,by inserted sections of timber within the G.R.P. sandwich panels.

One way of carrying out the invention is described in detail below with reference to drawings which illustrate only one specific embodiment, in which:-

Figure 1 is a sectional view in a plane transverse of its length of a refrigerated van body embodying the invention,

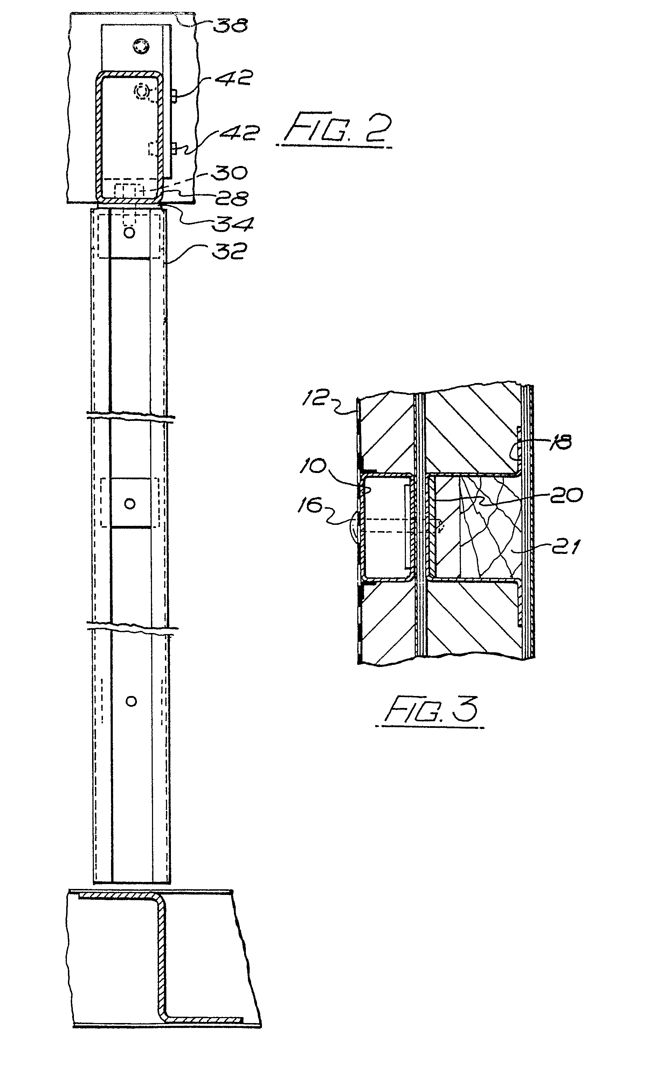

Figure 2 is a sectional view on the line 2-2 in Figure 1, and

Figure 3 is a sectional view on the line 3-3 in Figure 1.

Referring now to the drawings, the refrigerated van body there illustrated has a stout metal frame including a plurality of upstanding box section members 10 spaced apart along the length of the body to which aluminium panels 12 are riveted on the exterior of the body.

So-called G.R.P. sandwich panels 14, that is to say panels of heat insulating foam material sandwiched between sheets of plywood or the like faced with a synthetic plastics material, are used to line the side walls at the interior of the body, the sandwich panels being secured to the metal frame by connectors 16 inserted through holes in the box section members 10 and in the aluminium panels 12. (The arrangement is such that the rivets which secure the aluminium panels in position are arranged in rows and the connectors 16, being fewer in number that the rivets, are spaced apart along the rows of rivets and replace respective rivets at those spaced intervals). As shown in Figure 3, the sandwich panels have been specially prepared to receive the connectors from the outside of the body, so that their interior surfaces remain flat and smooth, by having been fitted with channels 18 of substantially top-hat section before the plastics faced interior plywood panel has been applied, each metal channel containing a flat plate 20 with an aperture for an associated connector. Each metal channel contains also a stout section of timber 21. When the sandwich panel has been placed in position the sections of timber constitute a series of upstanding load-carrying posts resting on the floor of the body but hidden from view beneath the plywood and synthetic plastics facing of the panel.

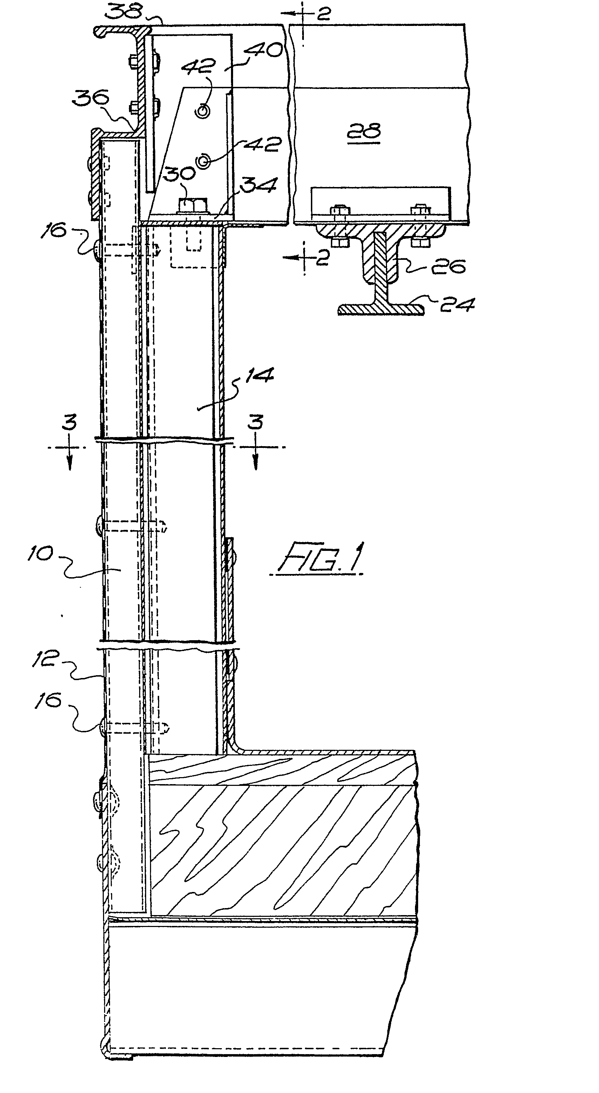

The roof of the van is provided with longitudinally extending load-carrying rails 24 (one only of which is shown in Figure 1) secured to brackets 26 depending from a series of transverse support beams 28. The support beams which are of rectangular hollow cross section and made of metal, rest at their opposite ends on the posts within the sandwich panels lining the side walls of the body, being fastened thereto by connectors 30 which engage holes in respective metal inserts 32 spaced apart along the top surfaces of the sandwich panels and embracing the upper ends of said posts. A strip 34 of a resilient material is disposed between the top surface of each sandwich panel and the ends of the support beams which rest on them.

The upper ends of the upstanding frame members 10 are connected to longitudinally extending extruded aluminium sections 36 to which a metal roof panel 38 is secured. Spacer members 40 of angle section are connected to the extruded sections at intervals and to the adjacent ends of respective support beams, the spacer members being made of a heat insulating material. The spacer members 40 although made of a heat insulating material are quite thick and very strong. Each spacer member is secured to its respective support beam by means of a pair of widely spaced rivets 42, that is to say in a manner which effectively resists any tendency for lozenging of the van body as a result of the applied roof loading and dynamic loading of the body.

It will be seen that the construction is such that there is no direct metal to metal connection between the support beams and the metal frame of the body. Nevertheless, the structure is very strong and is designed to resist lozenging of the body. Furthermore, although some vertical load is imposed upon the G.R.P. sandwich panels by the support beams, this loading is minimal and is taken by the wooden posts which have been built into the sandwich panels during their manufacture. As the strips 34 of resilient material become compressed, the spacer members 40 take a greater amount of vertical load and this is then transmitted directly to the metal frame of the body through the upstanding posts.

Thus there is provided a construction of van body which it is thought will have the advantages of previously known construction methods without their disadvantages. A van embodying the invention is devoid of rivets along the inside walls of the body and consequently is very hygienic. The G.R.P. panels take only a very small part of the applied roof loading and of any dynamic loading resulting from road travel and/or from side winds, and even if the G.R.P. panels start to deteriorate over a long period this will not be a safety hazard. The resistance to lozenging provided by the stout connection of the ends of the support beams to the metal frame will result in the end frames being relatively free from any tendency to distortion so that the rear opening doors are unlikely to give trouble; that is to say they are unlikely to suffer from jamming through distortion of the rear end frame.

Various modifications may be made. For example, it will be understood that the means whereby a load can be suspended from the roof of the van may be different from the illustrated arrangement. It will also be understood that the inserted load-carrying members in the G.R.P. sandwich panels need not necessarily be constituted by inserted sections of timber; inserted lengths of metal tube or non-circular sections of metal could be used.

CLAIMS:

1.    A refrigerated van which at its exterior has aluminium panels (12) riveted to upstanding members of a stout metal frame and which at its interior has G.R.P. sandwich panels (14) also secured to the metal frame, the roof of the van being provided with longitudinally extending load-carrying rails (24) secured to a series of transverse support beams (28), characterised in that the transverse support beams (28) rest at their opposite ends on the G.R.P. sandwich panels (14) lining the side walls and are also connected to upper ends of the upstanding frame members (10).

2.    A refrigerated van according to claim 1, in which a strip (34) of a resilient material is disposed between the top surface of each sandwich panel (14) and the ends of the support beams (28) which rest on them, the arrangement being such that some of the vertical loading from the support beams (28) is transmitted directly to the metal frame of the van body through the strips (34) of resilient material and through the sandwich panels (14).

3.    A refrigerated van according to either one of the preceding claims, in which the G.R.P. sandwich panels (14) are provided with inserted load-carrying members at the same spacing as the spacing of the upstanding members (10) of the frame, the transverse support beams (28) resting at their opposite ends on the inserted load-carrying members within the G.R.P. sandwich panels (14).

4. A refrigerated van according to claim 3, in which the G.R.P. sandwich panels (14) are secured to the upstanding members (10) of the stout metal frame by connectors (16) inserted through holes in the upstanding members (10) from the outside of the body, the sandwich panels (14) having been specially prepared to receive the connectors (16) from the outside of the body so that their interior surfaces remain flat and smooth by having been fitted with metal channels (18) of substantially top hat section before a plastics faced interior plywood panel has been applied, each metal channel (18) containing a flat plate (20) with an aperture for the or each associated connector (16), each metal channel containing also one of the inserted load-carrying members on which one end of a transverse support beam (28) rests.

5. A refrigerated van according to either one of claims 3 and 4, in which the inserted load-carrying members in the G.R.P. sandwich panels are inserted sections of timber (21).

6. A refrigerated van according to any one of the preceding claims, in which means whereby the opposite ends of the transverse support beams are connected to the upper ends of the upstanding frame members (10) are constituted by longitudinally extending extruded sections (36) connected to said upper ends of the upstanding frame members, and spacer members (40) of a heat insulating material connecting the extruded sections to the ends of the transverse support beams whereby there is no direct metal to metal connection between the support beams (28) and the metal frame.

7. A refrigerated van according to any one of the preceding claims, in which the upstanding members (10) of the stout metal frame are of rectangular hollow cross section.

8. A refrigerated van according to any one of the preceding claims, in which the transverse support beams (28) are of rectangular hollow cross section.

1/2

*FIG. 1*

FIG. 2

FIG. 3

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | FR-E- 94 041 (ANDRIEU) <br> * Page 2, lines 59-65; claim 7; figures 1-7 * | 1,3-6 | B 60 P 3/20 |
| Y,A | GB-A-1 140 267 (BONALLACK & SONS) <br> * Figures 1-3 * | 1,3,4, 6,7 | |
| A | GB-A-1 497 803 (CRAVEN TASKER) | | |
| A | US-A-4 145 080 (MILLER et al.) | | |

TECHNICAL FIELDS SEARCHED (Int. Cl. ³)

B 60 P 3/00

The present search report has been drawn up for all claims

| Place of search | Date of completion of the search | Examiner |
|---|---|---|
| BERLIN | 11-05-1983 | LUDWIG H J |